# EUROPEAN PATENT SPECIFICATION

(11) **EP 3 735 816 B1**
(45) Date of publication and mention of the grant of the patent: **22.12.2021**
(21) Application number: 19173606.5
(22) Date of filing: 09.05.2019
(51) Int. Cl.: A01D 75/18, A01D 43/08, A01B 71/08, A01D 69/00

(54) **SCREEN FOR A FORAGE HARVESTER**
SCHUTZABDECKUNG FÜR EINEN FELDHÄCKSLER
ÉCRAN POUR RÉCOLTEUSE-HACHEUSE

(43) Date of publication of application: 11.11.2020
(73) Proprietor: CNH Industrial Belgium N.V., 8210 Zedelgem (BE)
(72) Inventor: Verbeek, Rudi Roger, 8800 Roeselare (BE); Vanderstraeten, Nick R.M., 9770 Kruishoutem (BE); Van Belleghem, Stijn, 9990 Maldegem (BE); Depestel, Bernard E.D., 8730 Beernem (BE)
(74) Representative: CNH Industrial IP Department

(56) References cited:
- US-A1- 2019 011 081
- US-B2- 6 659 859
- US-B2- 8 276 355
- US-B2- 8 573 342

## Description

### FIELD OF THE INVENTION

The present invention relates to a forage harvester comprising a screen for preventing crop constituents escaping from the crop flow channel ending up in, e.g., a dust screen or radiator of the cooling unit.

### BACKGROUND OF THE INVENTION

Forage harvesters are farm machines that harvest and comminute crops, such as corn (maize) and grass, to produce animal feed.

To produce animal feed, a forage harvester typically undertakes the following steps. First, the forage harvester cuts and gathers crops from a field using a header at its front crops and then pulls the cut crops into a crop flow channel of the forage harvester using feed rolls installed in a housing constituting the inlet of the channel. In the crop flow channel, the crop is cut into smaller pieces by a chopper, and then blown into an inlet of a spout by a blower. The spout discharges the cut crop from the forage harvester, preferably into a trailer driven adjacent to or behind the forage harvester.

Typically when producing animal feed from maize, the forage harvester will be provided with a crop processor. The crop processor is positioned in the crop flow channel between the chopper and the blower. The crop processor typically consists of two toothed rolls with a very small gap therebetween and is configured to fracture or damage the skin of the chopped crops, typically corn kernels, in order to release all available nutrients therefrom. The crop processor thereby produces many small fragments of crops and a vast amount of crop juice. The housing of the crop processor may comprise a movable part for accommodating the movement of one toothed roll to the other.

The crop flow channel comprises the feed roll housing, the chopper housing, the blower housing and the inlet of the spout. At the rear of the crop flow channel, there is typically provided an engine with a cooling unit comprising a radiator, a cooling fan and a dust screen for preventing dust and dirt being sucked into the cooling unit.

A maintenance area is usually provided between the crop flow channel and the cooling unit. The maintenance area provides access to maintenance engineers for carrying out maintenance work on the forage harvester. This maintenance area also provides access to the area between the chopper and the blower for allowing the crop processor to be installed into or taken out of the crop flow channel when needed.

When, e.g., harvesting maize and using the crop processor, the high volume and speed of the crop that is pushed through the small gap between the crop processor rolls, may cause significant amounts of crop fragments and juice to escape the crop flow channel through a gap at the movable part of the crop processor housing and be released into the maintenance area. The speed of the escaping material and the air flow generated by the cooling fan can cause the material to pass through the maintenance area, reach the cooling unit and get stuck in the dust screen of the radiator. Crop material that gets stuck in the dust screen may reduce the ability of the cooling unit to suck in air. Some of the juice and smaller crop fragments may even pass through the dust screen and smear or damage the cooling fan and the radiator, hence further affecting the cooling unit's ability to effectively cool the engine.

When producing animal feed from mainly leaf type crops such as grass or alfalfa, such crops are often pre-cut by a mower and left to dry in the sun before the forage harvester gathers them. In this case, there is usually no need to cut the crop on gathering using a pick-up header. When leaf type crops were not left to dry completely in the field, or are harvested by a mower header installed on the forage harvester itself, they can also produce a lot of juice as they are conveyed through the crop flow channel. This juice can also escape the crop flow channel, e.g., at the connections of the various housings, pass through the maintenance area and hit the dust screen of the cooling unit, where it may impair the cooling capacity of the cooling unit.

Up to now, solid screens, made of metals or hard plastics, have been positioned in the maintenance area between the crop flow channel and the cooling unit so as to prevent at least some crop fragments and/ or crop juice from passing to the maintenance area from the crop flow channel. The screens are removably installed to allow for installation of the crop processor in the crop flow channel and for removing it therefrom when needed.

However such screens encounter some difficulties. Since these screens are cumbersome and unwieldy, it is often difficult to install them in the maintenance area for use. Similarly, it is difficult to remove them. In addition to this, a lot of space is taken up when storing these screens. Larger screens allow for easier access to the crop flow channel, but are more difficult to handle.

US8,573,342B2 discloses a harvesting machine with an enclosed engine compartment and a screen arrangement with perforated filter which can be positioned at the forward side of the engine compartment.

What is needed in the art is a screen that overcomes some of the installation and storage difficulties mentioned above.

### SUMMARY OF THE INVENTION

According to the invention, this objective is achieved by providing a forage harvester comprising a crop flow channel for conveying crop from a forage harvester header to a spout for discharging, a cooling unit for cooling an engine of the forage harvester, and a maintenance area between the crop flow channel and the cooling unit. The forage harvester further comprises a screen releasably arranged in the maintenance area, the screen comprising a flexible sheet that extends across a substantial part of a width of the maintenance area so as to shield the cooling unit from crop particles escaping from the crop flow channel.

Since the sheet is flexible, the screen is easily fitted in and removed from the forage harvester and is also easily stored when not in use (since it may, for example, be rolled up into a roll and hence take up little space).

The flexible sheet may, e.g., be a canvas fabric, preferably a polyester canvas fabric. Such a material is advantageous for the sheet since it is durable.

The cooling unit may comprise a radiator and a dust screen, the dust screen being positioned between the radiator and the maintenance area and shielded by the flexible sheet from crop particles escaping from the crop flow channel. As such the flexible sheet prevents the dust screen from being clogged with crop particles, such as juice and crop fragments, produced in the crop flow channel.

The flexible sheet may comprise a first end and a second end opposite the first end, the screen comprising a first anchor coupled to the first end of the flexible sheet for releasably securing the flexible sheet to the maintenance area, a second anchor coupled to the second end of the flexible sheet for releasably securing the flexible sheet to the maintenance area, and a tensioning means for providing the coupling of the first and/ or second end of the flexible sheet to the respective anchor so as to keep the flexible sheet taut.

The first anchor may comprise a first anchor rod and/ or the second anchor may comprise a second anchor rod, the first and/ or second anchor rod extending along the respective end of the flexible sheet. Such anchor rods are a simple way of ensuring that the flexible sheet is both fixed in place in the maintenance area and kept taut. Anchor rods extending along the respective ends of the flexible further ensure that the sheet ends are kept straight, not only in the vertical direction, but also horizontally.

The first and/ or second end of the flexible sheet may define an anchor tube in which the respective anchor rod is securely arranged. Such an arrangement of an anchor rod in an anchor tube ensures a particularly strong connection of the anchor rod to the flexible sheet.

In one embodiment, the tensioning means comprises at least one elastic connector that connects the first and/ or second end of the flexible sheet to the respective anchor rod. This elastic connector allows the screen to be arranged on mounts with ease. For example, to fit the screen with at least one elastic connector on mounts, anchor rods are first pulled away from each other, thereby stretching the at least one elastic connector and extending the length of the screen. In this stretched state, the anchor rods can then be easily and firmly arranged in the mounts.

The at least one elastic connector may comprise an elastic cord coiled around the respective anchor rod and through a series of holes in the respective end of the flexible sheet. This arrangement is beneficial since it is easily manufactured. Both cord ends of the elastic cord may be securely fixed to an anchor rod or an end of the flexible sheet. Each cord end of the elastic cord may extend through an aperture in an anchor rod or a hole in the end of the flexible sheet and define a knot larger than the aperture or hole such that the cord end is securely fixed adjacent to the aperture or hole.

Alternatively, the at least one elastic connector may comprise a plurality of elastic rings each coiled around the respective anchor rod through a respective hole in the end of the flexible sheet.

The screen may advantageously comprise a solid slat that extends along the respective end of the flexible sheet. The solid slat may at least in part define the series of holes. The solid slat may be fixedly secured to the respective end of the flexible sheet. This solid slat reinforces the second end of the flexible sheet and thereby mitigates the risk of a tear in the flexible sheet.

In another embodiment, the second end of the flexible sheet is folded over the second anchor rod such that the second end of the flexible sheet extends towards the first end. The tensioning means may then comprise at least one tie down strap that connects the first end of the flexible sheet to the second end. This type of embodiment has the advantage that different maintenance areas that may require screens of slightly different sizes can use exactly the same sheets. By adjusting the length of the tie down strap, the sheet can be kept taut, regardless of the exact size of the opening the screen is installed in.

Such a screen may further comprise a connector rod extending along the second end of the flexible sheet, the at least one tie down strap connecting the anchor rod at the first end to the connector rod. This connector rod supports the second end of the flexible sheet thus reducing the risk of a tear in the flexible sheet arising from the pulling force of the at least one tie down strap. The connector rod may be arranged in a connector tube, formed by the sheet material at the second end of the sheet.

Similarly, also the first end of the flexible sheet may be folded over the first anchor rod such that the first end of the flexible sheet extends towards the second end, with at least one tie down strap connected between the two sheet ends. In such an arrangement, shortening the tie down strap results in bringing the two sheet ends closer together, thereby tautening the sheet. Also here, connector rods extending along the respective sheet ends may be used, the at least one tie down strap connecting the two connector rods. The connector rods preclude the need to apply undue tension directly on the flexible sheet at the first and second ends thereof and hence mitigates the risk of a tear. Also these connector rods may, of course, be arranged in connector tubes formed by the sheet material at the respective sheet ends.

In all embodiments using tie down straps, the first and second ends of the flexible sheet may comprise at least one slit near the sheet end, adjacent to the anchor or connector rod. A strap end of the at least one tie down strap may define a secure loop that extends through the slit and around the anchor or connector rod, thereby forming a secure attachment to that rod. If needed, the slit may be reinforced with some coating or material to ensure that the tensioning means will not tear the sheet apart. When anchor or connector tubes as described above are provided, larger cut-outs in the tube forming portions of the sheet material may allow for connecting the tie down strap to the relevant rod.

The first and second anchors may be releasably attached to opposing side walls of the maintenance area.

The maintenance area may comprise mounts that are securely fixed onto or adjacent to the opposing walls of the maintenance area, the first and second anchors being releasably attached to the mounts. Such mounts allow the screen to be easily fitted in the maintenance area and ensure that the flexible sheet is drawn taut.

When anchor rods are used, e.g., simple tubular, C-shaped, J-shaped or U-shaped mounting elements, installed in the maintenance area near the corners of the screen, can be used for securing the anchor rods in place. Because of the use of tensioning means, the rods may alternatively be received by even simpler Y-shaped mounts. The tension provided by the tensioning means will ensure that the rods remain in their mounts during use. When releasing the tension or exerting a sufficiently large force in a direction opposite to the tensioning force, the rods can be released from their mounts and the screen can be removed. Alternative mounting options are available and readily available to the skilled person.

The crop flow channel typically comprises a chopper for chopping the crop from the forage harvester header, and a blower for blowing the chopped crop to the spout for discharging, the flexible screen at least partly being arranged at a same vertical level as a section of the crop flow channel between the chopper and the blower. The crop flow channel may further comprise a crop processor arranged between the chopper and the blower for bruising or grinding the chopped crop before being blown into the spout for discharging, the screen at least partly being arranged at a same vertical level as the crop processor.

This arrangement is typical for forage harvesters harvesting maize. As maize is bruised and ground by the crop processer, a large amount of crop fragments and juice is produced. By arranging the screen at substantially the same vertical level as the crop processor, the majority of the crop fragments and crop juice is prevented from escaping to the cooling unit.

Alternatively, the crop flow channel may not comprise a crop processor. Such an arrangement is, e.g., common for forage harvesters harvesting leafy crops such as alfalfa or grass. If such crops are not left to dry properly before being gathered, a lot of juice will be produced in the crop flow channel. By arranging the screen at substantially the same vertical level of section of the crop flow channel between the chopper and the blower, the majority of the crop juice is prevented from escaping to the cooling unit.

It will be appreciated that preferred and/or optional features of the first aspect of the invention may be combined with the other aspects of the invention. The invention in its various aspects is defined in the independent claims below and advantageous features are defined in the dependent claims below.

### BRIEF DESCRIPTION OF THE DRAWINGS

For a better understanding of the invention, some embodiments of the invention will now be described with reference to the following drawings, in which:
Figure 1 is a side view of a forage harvester in accordance with the invention;
Figure 2 is a schematic view of the crop flow channel of the forage harvester of Figure 1;
Figure 3 is a perspective side view of the forage harvester of Figure 1 in which a screen in arranged;
Figure 4 is a close-up of a perspective side view of the forage harvester of Figure 1 in which a screen is arranged;
Figure 5 is an internal view of the forage harvester of Figure 1 in which a screen is arranged;
Figure 6 is a perspective view of a first embodiment of a screen and mounts according to the invention; and
Figure 7 is a perspective view of a second embodiment of a screen and mounts according to the invention.

### DETAILED DESCRIPTION

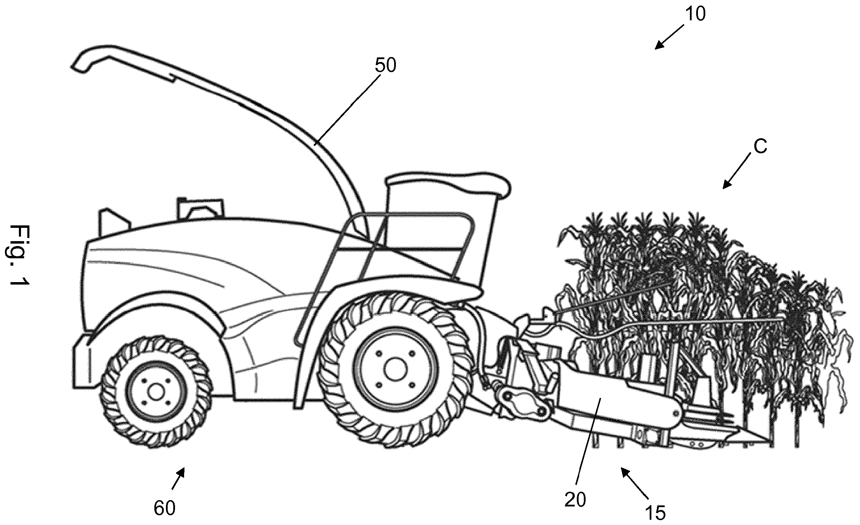

Figure 1 shows a harvesting vehicle 10 in the form of a forage harvester 10. The forage harvester 10 is configured to harvest crops C such as maize and grass that can, for example, be used in the production of animal feed.

To this end, the forage harvester 10 is provided with a header 20 and comprises a crop flow channel 30, and a spout 50. The header 20 is configured to cut and gather crop C from a field as the forage harvester 10 moves forward. The inlet of the crop flow channel 30 comprises a feed roll housing (not shown) with feed rolls 25, which are configured to draw the cut crop into the crop flow channel 30. In the crop flow channel 30, the crop is processed and then guided into the spout 50. The spout 50 discharges the crop material out of the forage harvester 10 into a trailer (not shown) driven adjacent to or behind the forage harvester 10.

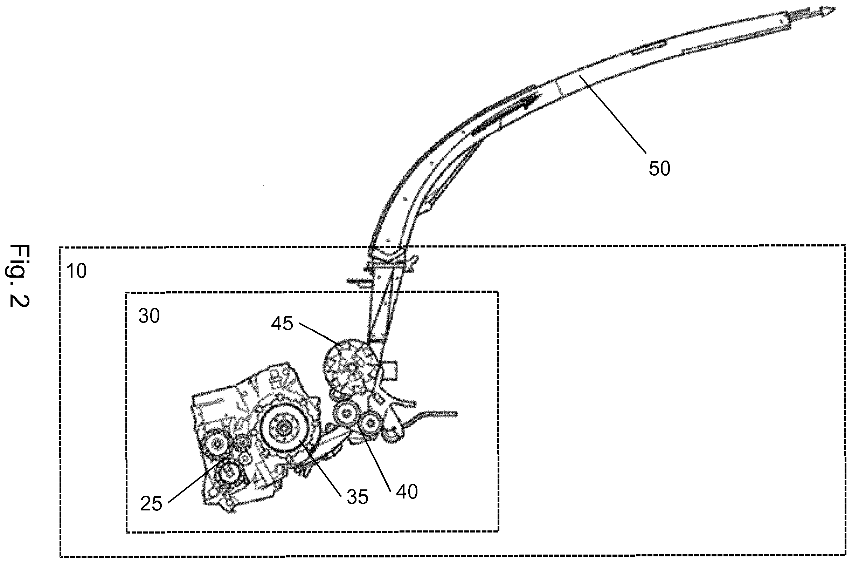

To process maize, the crop flow channel 30 houses a chopper 35, a crop processor 40 and a blower 45, the crop processor 40 being arranged between the chopper 35 and the blower 45. The chopper 35, typically a cutter drum cooperating with a stationary shearbar, chops the crop drawn into the crop flow channel 30 into small pieces. Most of the maize kernels are typically released from the cob at this stage. The crop processor 40 then bruises and crushes the skin of the maize kernels, so as to release all available nutrients therefrom. To this end, the crop processor 40 is made up of two toothed rolls 42 with a very small gap therebetween. The blower 45 then blows the processed crop up into the spout 50 for discharging. The feed rolls 25, the chopper 35, the crop processor 40, the blower 45 and the spout 50 are shown in Figure 2. Each of the rollers 42 has a housing (not shown) which is part of the crop flow channel 30. One of the rollers 42 is adjustable with respect to the other and its housing is moved with the roller 42 itself, thereby showing a variable gap, through which crop particles, such as juice and crop fragments, entrained by the roller 42 might escape.

In addition to maize, the forage harvester 10 can be used to harvest many other crops. For example, the forage harvester 10 can be used to harvest leaf type crops such as grass or alfalfa. Unlike maize, such leafy crops are usually cut in an earlier mowing pass and left to dry in the sun before the forage harvester 10 gathers them. Harvesting such crops does not require the use of a crop processor 40 and so the crop processor 40 is typically removed from the crop flow channel 30 when harvesting crops other than maize. If such leaf type crops are not left to dry sufficiently in the field, they can produce a lot of juice as they are fed through the crop flow channel 30. Such juices and other crop constituents may still escape between sections of the crop flow channel 30 during harvesting.

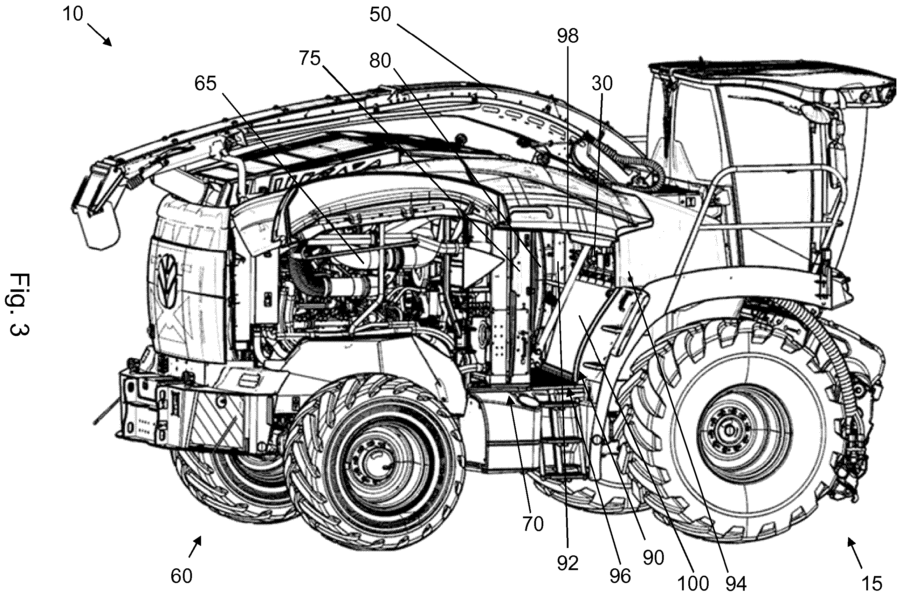

Figure 3 shows a perspective side view of a forage harvester 10 and internal components thereof. The forage harvester 10 is shown comprising an engine 65 and a cooling unit 70 configured to cool the engine 65 at the rear of the crop flow channel 30. The forage harvester 10 further comprises a maintenance area 90 positioned between the cooling unit 70 and the crop flow channel 30.

The maintenance area 90 is an open space inside the forage harvester 10 between the cooling unit 70 and the crop flow channel 30. The maintenance area 90 is sufficiently spacious so as to allow maintenance engineers to perform maintenance work on various components of the forage harvester 10 that are accessible therefrom. In this area, harvester operators may have access to the crop flow channel 30, and can, for example, install and remove the crop processor 40 therefrom.

The maintenance area 90 is enclosed on both sides by opposing side walls 92, 94 and from above by a ceiling (not shown) and from below by a floor 96. The distance between opposing side walls 92, 94 of maintenance area 90 is a width of the maintenance area 90. A portion of the side walls 92, 94, typically the front portion, is stationary and affixed to the chassis of the harvester and at least one of the side walls 92, 94 is provided with a hinged cover 98 which when pivoted upwards, as in Figure 2, allows operators to access the maintenance area 90.

Because of the above-stated arrangement, crop products (including crop fragments and/ or juice) produced in the crop flow channel 30 when the forage harvester 10 is in use may pass through the maintenance area 90 and reach the cooling unit 70.

In this forage harvester 10, the cooling unit 70 comprises a radiator 75 with coolant for cooling the engine 65, a fan (not shown) arranged behind the radiator 75 for drawing air into and through the radiator 75 for cooling the coolant, and a dust screen 80, preferably in the form of a rotatable mesh, arranged between the radiator 75 and the maintenance area 90 to prevent dust and dirt from getting stuck in the radiator 75 and therefore preventing the radiator 75 from performing its cooling function. Crop particles that escape the crop flow channel 30 can build up on the dust screen 80 and prevent air from being drawn into the radiator 75 from the maintenance area 90.

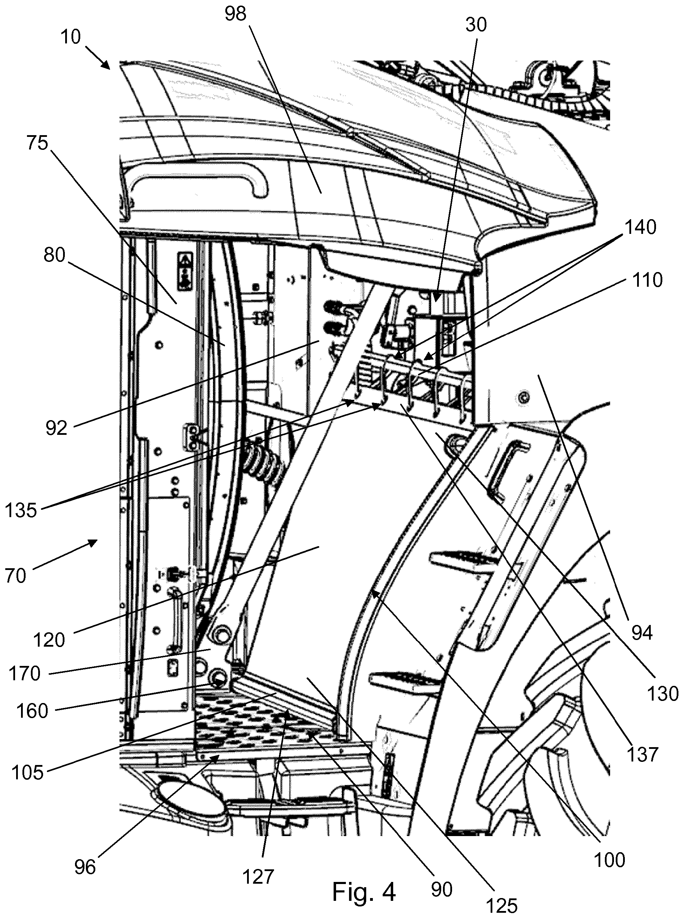

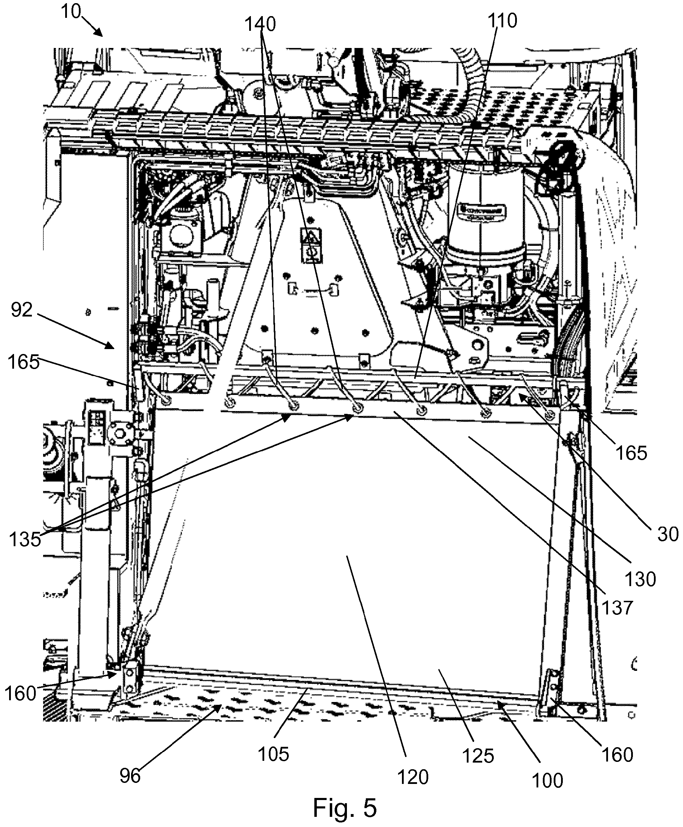

To prevent crop products produced in the crop flow channel 30 from clogging up the dust screen 80 of the cooling unit 70, the forage harvester 10 is provided with a screen 100. The screen 100 is arranged in the maintenance area 90 behind the crop flow channel 30 and in front of the dust screen 80, as shown in Figures 3, 4 and 5. The screen 100 is arranged between opposing side walls 92, 94 of the maintenance area 90 such that the screen 100 extends across a substantial part of the width of the maintenance area 90, as best shown in Figures 4 and 5. The screen 100 is beneficially arranged at a same vertical level as the chopper 35, the crop processor 40 and the blower 45 since this is where the majority of the crop fragments and/ or juice is produced and enters the maintenance area.

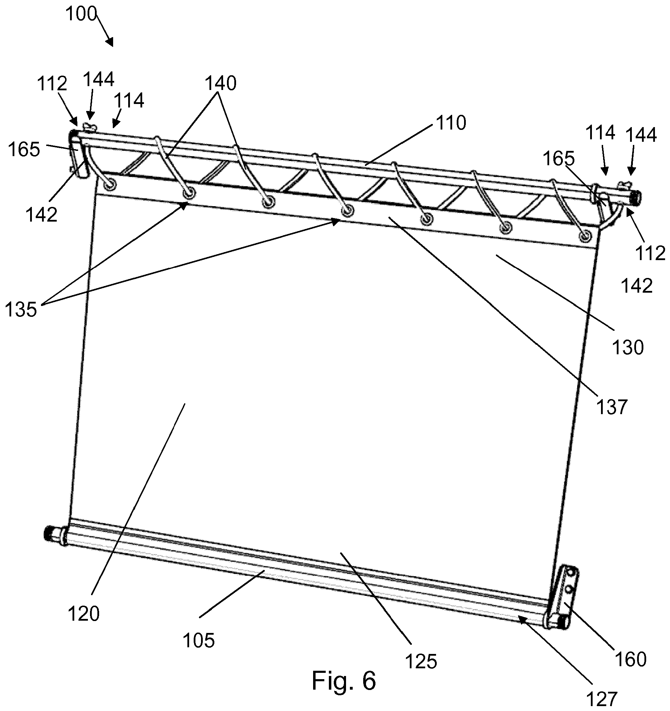

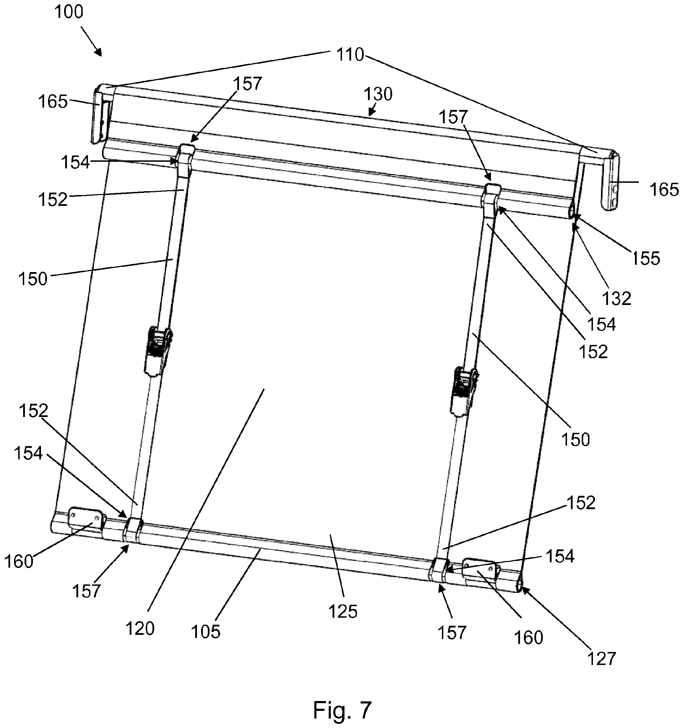

As best shown in Figure 6 and 7, the screen 100 comprises a first and a second anchor 105, 110 for securing the screen 100 in the maintenance area 90 and a substantially rectangular sheet 120 extending between the first and the second anchor 105, 110. To this end, the sheet 120 comprises a first end 125 that is coupled with the first anchor 105 and a second end 130 that is coupled with the second anchor 110. The screen 100 also comprises a tensioning means that provides the coupling of the first and/ or second end 125, 130 of the flexible sheet 120 to the respective anchor 105, 110 for keeping the sheet 120 taut.

As such, the risk of crop particles produced in the crop flow channel 30 escaping to the adjacent maintenance area 90 is largely mitigated. This substantially limits the extent to which crop particles build up on the dust screen 80 of the cooling unit 70, and ensures the cooling unit 70 is able to cool the engine 65 without hinder.

The screen 100 is beneficially releasably arranged in the maintenance area 90 so that it can be installed in and removed from the maintenance area 90 as necessary. To allow for easy installation and removal of the screen 100 in the maintenance area 90, the sheet 120 of the screen 100 is made of a flexible material such as (a preferably polyester) canvas fabric. Since the sheet 120 is flexible, it is also advantageously able to be rolled up into a roll and therefore easily stored.

Removal or installation of a crop processor 40 is only possible after removal of the screen 100. The flexibility, easy mounting and dismounting and light weight of the screen 100 thus are very advantageous when the harvester 10 is regularly used for different crop types.

Now different embodiments of the screen 100 will be described in more detail.

In the embodiment of Figure 6, the first anchor 105 and the second anchor 110 are rods and the first end 125 of the flexible sheet 120 is securely connected to the first anchor rod 105. To this end, the first end 125 of the flexible sheet 120 is fitted with a first tube 127 that extends along the width of the first end 125. This can be achieved by rolling the first end 125 of the flexible sheet 120 up into a loop and securely fastening it in place, for example by stitching. The first anchor rod 105 is then tightly arranged in the first tube 127 of the first end 125 of the flexible sheet 120.

The tensioning means is an elastic connector in the form of an elastic cord 140 that connects the second end 130 of the flexible sheet 120 to the second anchor rod 110. Since the distance between the first and second ends 125, 130 of the flexible sheet 120 is less than the distance between the first and second anchor rods 105, 110 after installation in the maintenance area 90, and since the elastic cord 140 is under tension, the flexible sheet 120 is drawn taut.

So as to attach to the elastic cord 140 to the second end 130 of the flexible sheet 120 and the second anchor rod 110, the second end 130 of the flexible sheet 120 is provided with a plurality of holes 135 which extend in series along the width of the second end 130. The holes may be reinforced by, e.g., a plastic or metal ring. The elastic cord 140 coils through each of the holes 135 and around the second anchor rod 110 alternately, thereby securely coupling the second end 130 of the flexible sheet 120 and the second anchor rod 110.

A small aperture 112 is arranged in each anchor rod end 114 of the second anchor rod 110. Each cord end 142 of the elastic cord 140 extends through one of the apertures 112. On one side of such an aperture 112, each cord end 142 of the elastic cord 140 is arranged with a knot 144 that is larger than said aperture 112. This holds the end of the elastic cord 140 firmly in place. Alternatively, each cord end 142 of the elastic cord 140 can extend through one of the holes 135 in the second end 130 of the flexible sheet 120 and define a knot 144 there.

To mitigate the risk of tearing at the second end 130 of the flexible sheet 120 in the vicinity of the holes 135, the sheet 120 may be provided with a solid slat 137 that is securely connected to and extends along the second end 130 of the flexible sheet 120. The slat 137 may define at least in part the series of holes 135 through which the elastic cord 140 passes. To this end, the slat 137 comprising a series of holes may be adhered to the second end 130 of the flexible sheet 120, as shown in Figure 6.

Alternatively, the second end 130 of the flexible sheet 120 may be provided with a rectangular channel (not shown) that extends along the width of the second end 130. This can be achieved by folding the second end 130 of the flexible sheet 120 over itself and securely fastening it in place, for example by stitching. The slat 137 with the series of holes may then be tightly arranged in the rectangular channel of the second end 130 of the flexible sheet 120.

Other elastic connectors can be used in place of the elastic cord 140. For example, a tensioning means comprising plurality of elastic rings (not shown) can be used. Each elastic ring may extend through a hole 135 in the second end 130 of the flexible sheet 120 and around the second anchor rod 110.

Alternatively, a tensioning means comprising a strip of elastic material (not shown) can be used. The elastic strip must be securely connected to and extend along both the second end 130 of the flexible sheet 120 and the second anchor rod 110.

In other embodiments, the tensioning means comprises two tie down straps 150, as shown in Figure 7.

In these embodiments, the distance between the anchor rods 105, 110 is smaller than the length of the flexible sheet 120. The flexible sheet 120 is folded over the second anchor rod 110 such that the second end 130 of the flexible sheet 120 extends towards the first end 125 of the flexible sheet 120. The two tie down straps 150 are coupled to each end 125, 130 of the flexible sheet 120 and are shortened until the flexible sheet 120 is drawn taut.

To preclude tearing of the flexible sheet 120 at its second end 130, the screen 100 is provided with a connector rod 155 which is securely attached to and extends the width of the second end 130 of the flexible sheet 120. The two tie down straps 150 connect the first anchor rod 105 to the connector rod 155. As such, the connector rod 155 avoids having to attach the tie down straps 150 to the ends 125, 130 of the flexible sheet 120 directly.

To securely attach the connector rod 155 to the second end 130 of the flexible sheet 120, the second end 130 of the flexible sheet 120 is fitted with a second tube 132 that extends along the width of the second end 130. This can be achieved by rolling the second end 130 of the flexible sheet 120 up into a loop and securely fastening it in place, for example by stitching. The connector rod 155 is then tightly arranged in the second tube 132 of the second end 130 of the flexible sheet 120.

To connect the tie down straps 150 to both the first anchor rod 105 and the connector rod 155, the tubes 127, 132 at the first and second ends 125, 130 of the flexible sheet 120 are provided with a slit or larger cut-out 157 at each position where a down strap 150 is to be connected. Each strap end 152 of the two straps 150 is arranged with a secure loop 154. Each loop 154 passes through a slit or cut-out 157 in the tube 127, 132 at an end 125, 130 of the flexible sheet 120 and around a rod 105, 155, thereby forming a secure attachment.

Alternatively, only one tie down strap 150 or a plurality of tie down straps 150 can be used. However, it is more difficult to ensure the flexible sheet 120 is kept taut when only one tie down strap 150 is used. More than two down straps 150 are not needed to ensure the screen 100 is stable. As such, a screen 100 comprising two tie down straps 150 is preferred.

In addition to the above embodiments, the skilled person appreciates that the second end 130 of the flexible sheet 120 could be fixed directly to the second anchor rod 110 and that any of the tensioning means described above could be used instead to couple the first end 125 of the flexible sheet 120 to the first anchor rod 105.

Moreover, the screen 100 could be provided with two tensioning means at each end of the flexible sheet 120 to couple each of the ends 125, 130 of the flexible sheet 120 to a respective anchor rod 105, 110.

For example, a screen 100 may comprise two elastic cords 140 which securely connect each end 125, 130 of the flexible sheet 120 to a respective anchor rod 105, 110. To this end, each end 125, 130 of the flexible sheet 120 may be provided with a series of holes 135. Each elastic cord 140 may then extend through the holes 135 of each end 125, 130 of the flexible sheet 120 and around the respective anchor rod 105, 110, as described above.

In another example, a screen 100 may be provided with two connector rods 155 which extend along and are securely connected to both ends 125, 130 of the flexible sheet 120. Here, each end 125, 130 of the flexible sheet 120 is folded around a respective anchor rod 105, 110, and at least one tie down strap 150 is arranged to securely connect and extend between the two connector rods 155.

The skilled person appreciates other conceivable permutations and arrangements are possible which achieve a taut flexible sheet 120.

It shall now be explained how the screen 100 is releasably arranged in the maintenance area 90.

As best shown in Figure 5, the maintenance area 90 is provided with a first pair of mounts 160 and a second pair of mounts 165. One mount of each pair 160, 165 is located on or adjacent one of the side walls 92, 94, preferably on or adjacent the stationary side wall portions of the maintenance area 90, while the other 160, 165 is located on or adjacent a side wall 92, 94, preferably on or adjacent the stationary side wall portions of the maintenance area 90 directly opposite. That is, each pair of mounts 160, 165 is positioned on or near opposing side walls 92, 94. The mounts 160, 165 are fixedly secured to the side walls 92, 94 or to chassis parts adjacent these side walls 92, 94 of the maintenance area 90 with bolts.

The skilled person appreciates that the mounts 160, 165 may be secured to any chassis parts or functional units within the forage harvester 10 which are suitable for supporting the mounts 160, 165 and which ensure that the screen 100 extends across a substantial part of a width of the maintenance area 90 so as to shield the cooling unit 70 from crop particles escaping from the crop flow channel 30.

To ensure a suitably sturdy screen 100, the skilled person appreciates that all rods 105, 110, 155 and mounts 160, 165 are preferably made of a suitably solid and strong material such as stainless steel.

The first and second anchor rods 105, 110 are releasably arranged in the first and second pair of mounts 160, 165. Since the flexible sheet 120 is under tension, the anchor rods 105, 110 are, and the hence the screen 100 is, held firmly in the mounts 160, 165.

In Figure 6, the second pair of mounts 165 are Y-shaped mounts. The skilled person appreciates many alternative forms of mounts 160, 165 which will allow the anchor rods 105, 110 to be securely arranged and the flexible sheet 120 to be drawn taut including, for example, C-, J- and U-shaped mounts.

The first pair of mounts 160 may be advantageously located adjacent to the floor 96 of the maintenance area 90 such that the flexible sheet 120 extends away from the floor 96 of the maintenance area 90, as best shown in Figures 4 and 5. Crop products are therefore unable to pass under the screen 100 into the maintenance area 90. When one of the first pair of mounts 160 is located opposite the hinged cover 98 of the maintenance area 90, as best shown in Figure 4, it may be convenient to incorporate the mount in a chassis part 170 opposite the above-mentioned cover 98.

In other embodiments, the mounts 160, 165 of the maintenance area 90 are arranged in the floor 96 and the ceiling (not shown) of the maintenance area 90 instead of in the side walls 92, 94 of the maintenance area 90.

To secure a screen 100 that makes use of at least one elastic connector such as an elastic cord 140 on the mounts 160, 165, as in Figure 6, first the anchor rods 105, 110 are pulled away from each other, thereby stretching the elastic cord 140 and extending the length of the screen 100. In this stretched state, the anchor rods 105, 110 can then be firmly arranged in the mounts 160, 165.

To secure a screen 100 that makes use of at least one tie down strap 150 on the mounts 160, 165, such as the screen 100 in Figure 7, the at least one tie down strap 150 may first be slackened, so as to allow the anchor rods 105, 110 to be moved away from each other. The anchor rods 105, 110 may then be arranged in the mounts 160, 165. To finish, the tie down strap 150 may be tightened so as to draw the flexible sheet 120 taut.

To remove either the screen 100 with the elastic connector or the screen 100 with the at least one tie down strap 150 from the mounts 160, 165, the above steps can be undertaken in reverse.
It will be appreciated that the method of attaching/ removing the screen 100 with the at least one elastic connector is significantly easier than the method of attaching/ removing the tie down strap 150 since there is no need to slacken or tighten the flexible sheet 120 so as to fit the screen 100 in the mounts 160, 165/ remove the screen 100 from the mounts 160, 165. However, screens 100 making use of at least one tie down strap 150 are more easily adaptable to fit in different spaces within forage harvesters 10).

Many modifications may be made to the specific examples described above without departing from the scope of the invention as defined in the accompanying claims.

## Claims

1. A forage harvester (10) comprising:
a crop flow channel (30) for conveying crop from a forage harvester header (20) to a spout (50) for discharging,
a cooling unit (70) for cooling an engine (65) of the forage harvester (10), and
a maintenance area (90) between the crop flow channel (30) and the cooling unit (70);
wherein the forage harvester (10) further comprises:
a screen (100) releasably arranged in the maintenance area (90), the forage harvester being **characterised in that** the screen (100) comprises a flexible sheet (120) that extends across a substantial part of a width of the maintenance area (90) so as to shield the cooling unit (70) from crop particles escaping from the crop flow channel (30).

2. The forage harvester (10) of claim 1, wherein the flexible sheet (120) comprises a first end (125) and a second end (130) opposite the first end (125), the screen (100) comprising
a first anchor (105) coupled to the first end (125) of the flexible sheet (120) for releasably securing the flexible sheet (120) to the maintenance area (90),
a second anchor (110) coupled to the second end (130) of the flexible sheet (120) for releasably securing the flexible sheet (120) to the maintenance area (90), and
a tensioning means for providing the coupling of the first and/ or second end (130) of the flexible sheet (120) to the respective anchor so as to keep the flexible sheet (120) taut.

3. The forage harvester (10) of claim 2, wherein the first anchor (105) comprises a first anchor rod and/ or the second anchor (110) comprises a second anchor rod extending along the respective end of the flexible sheet (120).

4. The forage harvester (10) of claim 3, wherein the tensioning means comprises at least one elastic connector that connects the first and/ or the second end (125, 130) of the flexible sheet (120) to the respective anchor rod (105, 110).

5. The forage harvester (10) of claim 4, wherein the elastic connector comprises an elastic cord (140) coiled around the respective anchor rod (105, 110) and through a series of holes (135) in the respective end of the flexible sheet (120).

6. The forage harvester (10) of claim 3, wherein the second end (130) of the flexible sheet (120) is folded over the second anchor rod (110) such that the second end (130) of the flexible sheet (120) extends towards the first end (125), and wherein the tensioning means comprises at least one tie down strap (150) that connects the first end (125) to the second end (130) of the flexible sheet (120).

7. The forage harvester (10) of claim 6, wherein the screen (100) further comprises a connector rod (155) extending along the second end (130) of the flexible sheet (120), the at least one tie down strap (150) connecting the first anchor rod (105) to the connector rod (155).

8. The forage harvester (10) of claim 6, wherein the first end (125) of the flexible sheet (120) is folded over the first anchor (105) rod such that the first end (125) of the flexible sheet (120) extends towards the second end (130), and wherein the screen (100) further comprises two connector rods (155) respectively extending along the first and second ends (125, 130) of the flexible sheet (120), the at least one tie down strap (150) connecting the two connector rods (155).

9. The forage harvester (10) of claim 2, wherein the first and second anchors (105, 110) are releasably attached to opposing side walls (92, 94) of the maintenance area (90).

10. The forage harvester (10) of claim 9, wherein the maintenance area (90) comprises mounts (160, 165) that are securely fixed onto or adjacent to the opposing walls of the maintenance area (90), the first and second anchors (105, 110) being releasably attached to the mounts (160, 165).

11. The forage harvester (10) of any preceding claim, wherein the crop flow channel (30) comprises a chopper (35) for chopping the crop from the forage harvester header (20), and a blower (45) for blowing the chopped crop to the spout (50) for discharging, the flexible screen (100) at least partly being arranged at a same vertical level as a section of the crop flow channel (30) between the chopper (35) and the blower (45).

12. The forage harvester (10) of claim 11, wherein the crop flow channel (30) further comprises a crop processor (40) arranged between the chopper (35) and the blower (45) for bruising kernels in the chopped crop before being blown into the spout (50) for discharging, the screen (100) at least partly being arranged at a same vertical level as the crop processor (40).

## Patentansprüche

1. Feldhäcksler (10), umfassend:
einen Ernteflusskanal (30) zum Befördern von Erntematerial von einem Feldhäckselvorsatz (20) hin zu einem Auswurfrohr (50) zum Entleeren,
eine Kühleinheit (70), um einen Motor (65) des Feldhäckslers (10) zu kühlen, und
einen Wartungsbereich (90) zwischen dem Ernteflusskanal (30) und der Kühleinheit (70);
wobei der Feldhäcksler (10) weiterhin aufweist:
einen Schirm (100), der lösbar im Wartungsbereich (90) angeordnet ist,
wobei der Feldhäcksler **dadurch gekennzeichnet ist, dass**
der Schirm (100) eine flexible Plane (120) aufweist, die sich über einen wesentlichen Teil der Breite des Wartungsbereichs (90) erstreckt, sodass sie die Kühleinheit (70) vor Erntepartikeln schützt, die aus dem Ernteflusskanal (30) austreten.

2. Feldhäcksler (10) nach Anspruch 1, wobei die flexible Plane (120) ein erstes Ende (125) und ein zweites Ende (130) gegenüber vom ersten Ende (125) aufweist, wobei der Schirm (100) aufweist:
eine erste Befestigungseinrichtung (105), die mit dem ersten Ende (125) der flexiblen Plane (120) gekoppelt ist, um die flexible Plane (120) lösbar am Wartungsbereich (90) zu sichern,
eine zweite Befestigungseinrichtung (110), die mit dem zweiten Ende (130) der flexiblen Plane (120) gekoppelt ist, um die flexible Plane (120) lösbar am Wartungsbereich (90) zu sichern, und
eine Spanneinrichtung, um die Verbindung des ersten und/oder zweiten Endes (130) der flexiblen Plane (120) zu der entsprechenden Befestigungseinrichtung bereitzustellen, sodass die flexible Plane (120) gespannt bleibt.

3. Feldhäcksler (10) nach Anspruch 2, wobei die erste Befestigungseinrichtung (105) eine erste Ankerstange aufweist und/oder die zweite Befestigungseinrichtung (110) eine zweite Ankerstange aufweist, die sich entlang des entsprechenden Endes der flexiblen Plane (120) erstreckt.

4. Feldhäcksler (10) nach Anspruch 3, wobei die Spanneinrichtung mindestens eine elastische Verbindungseinrichtung aufweist, die das erste und/oder zweite Ende (125, 130) der flexiblen Plane (120) mit der entsprechenden Stange der Befestigungseinrichtung (105, 110) verbindet.

5. Feldhäcksler (10) nach Anspruch 4, wobei die elastische Verbindungseinrichtung ein elastisches Seil (140) aufweist, das um die entsprechende Stange der Befestigungseinrichtung (105, 110) und durch eine Reihe von Löchern (135) in dem entsprechenden Ende der flexiblen Plane (120) gewickelt ist.

6. Feldhäcksler (10) nach Anspruch 3, wobei das zweite Ende (130) der flexiblen Plane (120) über die Stange der zweiten Befestigungseinrichtung (110) gefaltet ist, sodass sich das zweite Ende (130) der flexiblen Plane (120) hin zum ersten Ende (125) erstreckt, und wobei die Spanneinrichtung mindestens einen Spanngurt (150) aufweist, der das erste Ende (125) mit dem zweiten Ende (130) der flexiblen Plane (120) verbindet.

7. Feldhäcksler (10) nach Anspruch 6, wobei der Schirm (100) weiterhin eine Verbindungsstange (155) aufweist, die sich entlang des zweiten Endes (130) der flexiblen Plane (120) erstreckt, wobei der mindestens eine Spanngurt (150) die Stange der ersten Befestigungseinrichtung (105) mit der Verbindungsstange (155) verbindet.

8. Feldhäcksler (10) nach Anspruch 6, wobei das erste Ende (125) der flexiblen Plane (120) über die Stange der ersten Befestigungseinrichtung (105) gefaltet ist, sodass sich das erste Ende (125) der flexiblen Plane (120) hin zu dem zweiten Ende (130) erstreckt, und wobei der Schirm (100) weiterhin zwei Verbindungsstangen (155) aufweist, die sich entsprechend entlang des ersten und zweiten Endes (125, 130) der flexiblen Plane (120) erstrecken, wobei der mindestens eine Spanngurt (150) die zwei Verbindungsstangen (155) miteinander verbindet.

9. Feldhäcksler (10) nach Anspruch 2, wobei die erste und zweite Befestigungseinrichtung (105, 110) lösbar an den gegenüberliegenden Seitenwänden (92, 94) des Wartungsbereichs (90) angebracht sind.

10. Feldhäcksler (10) nach Anspruch 9, wobei der Wartungsbereich (90) Haltevorrichtungen (160, 165) aufweist, die sicher an oder neben den gegenüberliegenden Wänden des Wartungsbereichs (90) befestigt sind, wobei die erste und zweite Befestigungseinrichtung (105, 110) lösbar an den Haltevorrichtungen (160, 165) angebracht sind.

11. Feldhäcksler (10) nach einem der vorangehenden Ansprüche, wobei der Ernteflusskanal (30) einen Häcksler (35) aufweist, um das Erntematerial des Feldhäckselvorsatzes (20) zu häckseln, und ein Gebläse (45), um das gehäckselte Erntematerial zum Auswurfrohr (50) zum Entleeren zu befördern, wobei der flexible Schirm (100) mindestens zum Teil in einer selben vertikalen Ebene angeordnet ist wie ein Abschnitt des Ernteflusskanals (30) zwischen dem Häcksler (35) und dem Gebläse (45).

12. Feldhäcksler (10) nach Anspruch 11, wobei der Ernteflusskanal (30) weiterhin einen Kornbearbeiter (40) aufweist, der zwischen dem Häcksler (35) und dem Gebläse (45) angeordnet ist, um Körner im gehäckselten Erntematerial zu zerquetschen, bevor sie in das Auswurfrohr (50) zum Entleeren befördert werden, wobei der Schirm (100) mindestens zum Teil in einer selben vertikalen Ebene wie der Kornbearbeiter angeordnet ist.

## Revendications

1. Récolteuse-hacheuse (10) comprenant :
un canal d'écoulement de la récolte (30) pour transporter des matières récoltées d'une tête de récolteuse-hacheuse (20) vers une goulotte (50) de décharge,
une unité de refroidissement (70) pour refroidir un moteur (65) de la récolteuse-hacheuse (10), et
une zone d'entretien (90) entre le canal d'écoulement de la récolte (30) et
l'unité de refroidissement (70) ;
dans laquelle la récolteuse-hacheuse (10) comprend en outre :
un écran (100) agencé de manière amovible dans la zone d'entretien (90), la
récolteuse-hacheuse étant **caractérisée en ce que** l'écran (100) comprend une feuille flexible (120) qui s'étend à travers une partie importante d'une largeur de la zone d'entretien (90) de manière à protéger l'unité de refroidissement (70) des particules de récolte qui s'échappent du canal d'écoulement de la récolte (30).

2. Récolteuse-hacheuse (10) selon la revendication 1, dans laquelle la feuille flexible (120) comprend une première extrémité (125) et une deuxième extrémité (130) opposée à la première extrémité (125), l'écran (100) comprenant :
un premier dispositif d'ancrage (105) relié à la première extrémité (125) de la feuille flexible (120) pour fixer de manière amovible la feuille flexible (120) à la zone d'entretien (90).
un deuxième dispositif d'ancrage (110) relié à la deuxième extrémité (130) de la feuille flexible (120) pour fixer de manière amovible la feuille flexible (120) à la zone d'entretien (90), et
un moyen de tension permettant le couplage de la première et/ou deuxième extrémité(s) (130) de la feuille flexible (120) au dispositif d'ancrage respectif de manière à maintenir la feuille flexible (120) tendue.

3. Récolteuse-hacheuse (10) selon la revendication 2, dans laquelle le premier dispositif d'ancrage (105) comprend un premier boulon d'ancrage et/ou le deuxième dispositif d'ancrage (110) comprend un deuxième boulon d'ancrage s'étendant le long de l'extrémité respective de la feuille flexible (120).

4. Récolteuse-hacheuse (10) selon la revendication 3, dans laquelle le moyen de tension comprend au moins un connecteur élastique qui relie la/les première et/ou deuxième extrémité(s) (125, 130) de la feuille flexible (120) au boulon d'ancrage respectif (105, 110).

5. Récolteuse-hacheuse (10) selon la revendication 4, dans laquelle le connecteur élastique comprend un cordon élastique (140) enroulé autour du boulon d'ancrage respectif (105, 110) et à travers une série de trous (135) dans l'extrémité respective de la feuille flexible (120).

6. Récolteuse-hacheuse (10) selon la revendication 3, dans laquelle la deuxième extrémité (130) de la feuille flexible (120) est repliée sur le deuxième boulon d'ancrage (110) de sorte que la deuxième extrémité (130) de la feuille flexible (120) s'étende vers la première extrémité (120), et dans laquelle le moyen de tension comprend au moins une sangle d'arrimage (150) qui relie la première extrémité (125) à la deuxième extrémité (130) de la feuille flexible (120).

7. Récolteuse-hacheuse (10) selon la revendication 6, dans laquelle l'écran (100) comprend en outre une tige de raccordement (155) s'étendant le long de la deuxième extrémité (130) de la feuille flexible (120), la au moins une sangle d'arrimage (150) reliant le premier boulon d'ancrage (105) à la tige de raccordement (155).

8. Récolteuse-hacheuse (10) selon la revendication 6, dans laquelle la première extrémité (125) de la feuille flexible (120) est repliée sur le premier boulon d'ancrage (105) de sorte que la première extrémité (125) de la feuille flexible (120) s'étende vers la deuxième extrémité (130), et dans laquelle l'écran (100) comprend en outre deux tiges de raccordement (155) s'étendant respectivement le long des première et deuxième extrémités (125, 130) de la feuille flexible (120), la au moins une sangle d'arrimage (150) reliant les deux tiges de raccordement (155).

9. Récolteuse-hacheuse (10) selon la revendication 2, dans laquelle les premier et deuxième dispositifs d'ancrage (105, 110) sont attachés de manière amovible à des parois latérales opposées (92, 94) de la zone d'entretien (90).

10. Récolteuse-hacheuse (10) selon la revendication 9, dans laquelle la zone d'entretien (90) comprend des supports (160, 165) qui sont solidement fixés sur ou de manière adjacente aux parois opposées de la zone d'entretien (90), les premier et deuxième dispositifs d'ancrage (105, 110) étant attachés de manière amovible aux supports (160, 165).

11. Récolteuse-hacheuse (10) selon l'une quelconque des revendications précédentes, dans laquelle le canal d'écoulement de la récolte (30) comprend un hacheur (35) pour hacher les matières récoltées de la tête de la récolteuse-hacheuse (20), et une soufflante (45) pour souffler les matières récoltées hachées vers la goulotte (50) de décharge, l'écran flexible (100) étant au moins partiellement agencé à un niveau vertical qui correspond au niveau d'une partie du canal d'écoulement de la récolte (30) entre le hacheur (35) et la soufflante (45).

12. Récolteuse-hacheuse (10) selon la revendication 11, dans laquelle le canal d'écoulement de la récolte (30) comprend en outre un transformateur de récolte (40) agencé entre le hacheur (35) et la soufflante (45) pour abattre des graines des matières récoltées hachées avant d'être soufflées dans la goulotte (50) de décharge, l'écran (100) étant au moins partiellement agencé à un niveau vertical qui correspond au niveau du transformateur de récolte (40).
